# EUROPEAN PATENT APPLICATION

(11) **EP 1 071 289 A2**
(43) Date of publication of application: **24.01.2001**
(21) Application number: 00306187.6
(22) Date of filing: 20.07.2000
(51) Int. Cl.: H04N 7/26, H04N 1/32

(54) **Watermarking data streams**

(30) Priority: 21.07.1999 US 358077
(71) Applicant: Sarnoff Corporation, Princeton, NJ 08543-5300 (US)
(72) Inventor: Anderson, Bruce James Jr., Burlington County NJ 08620-9407 (US)
(74) Representative: Pratt, Richard Wilson

(57) **Abstract**

Watermarks are added to data streams (e.g., video streams) to enable improved detection and thereby prevention of the theft of such data streams. In one embodiment, a watermark containing receiver-dependent information is added to a video stream at an upstream node, where the video stream containing the watermark is transmitted to a downstream node corresponding to the receiver-dependent infonnation. In this way, a particular copy of a video stream can be analyzed to determine who was the intended end user of the video stream. These features can be implemented to aid in the detection of content theft and, through related deterrent effects, aid in the prevention of such theft in the first place.

## Description

### BACKGROUND OF THE INVENTION

### Field of the Invention

The invention relates to data processing and, more particularly, to digital watermarking of data streams, such as digital image sequences.

### Cross-Reference to Related Applications

The subject matter of this application is related to EP 98310315.1, EP-A-0 928 110, US patent application no. 09/001,205 ("the '205 application") filed 12/30/97 as attorney docket no. 12602, the teachings of which are incorporated herein by reference. The '205 application describes techniques for inserting a watermark into a compressed video bitstream without first having to fully decode the bitstream.

### Description of the Related Art

With the advent of digitization of images, digital image distribution, and digital video availability, copyright protection of such digital imagery has become a substantial issue for image publishers and authors. One technique used to identify digital video ownership is to embed into an image sequence a digital "watermark" containing information identifying the owner. Such watermarks should (a) be secure and robust to intentional corruption and to compression processing, (b) not be unreasonably complex to embed and extract, and (c) be compatible and interoperable with conventional image processing systems. For authentication applications, the watermark is generally invisible to a viewer of a decoded image sequence. However, in some applications, it is desirable to produce a visible watermark that can be removed by an authorized image decoder, but cannot be removed by an unauthorized decoder.

Illegal copying of video content is a serious problem. Such copying may occur at any of various different stages along the distribution path of video content as it is transmitted from the original producer of the video content to the final end user (i.e., the viewer) of that content.

### SUMMARY OF THE INVENTION

The present invention is directed to techniques for using digital watermarking to improve the ability to detect where along the distribution path from producer to viewer illegally obtained video content was pirated. As such, the present invention may provide a deterrent effect that will aid in the prevention of such content theft in the first place.

According to one embodiment, the present invention is a method for processing a data stream, comprising the step of (a) receiving, at an upstream node along a distribution path for the data stream, information identifying a downstream node along the distribution path; (b) encoding, at the upstream node, the information into the data stream as a watermark; and (c) transmitting the data stream with the watermark from the upstream node for receipt by the downstream node.

According to an alternative embodiment, the present invention is a method for processing a data stream, comprising the step of (a) analyzing the data stream to identify a watermark contained in the data stream, wherein the watermark, having been added at an upstream node along a distribution path, contains information identifying a downstream node of the distribution path; and (b) determining the downstream node from the watermark.

### BRIEF DESCRIPTION OF THE DRAWINGS

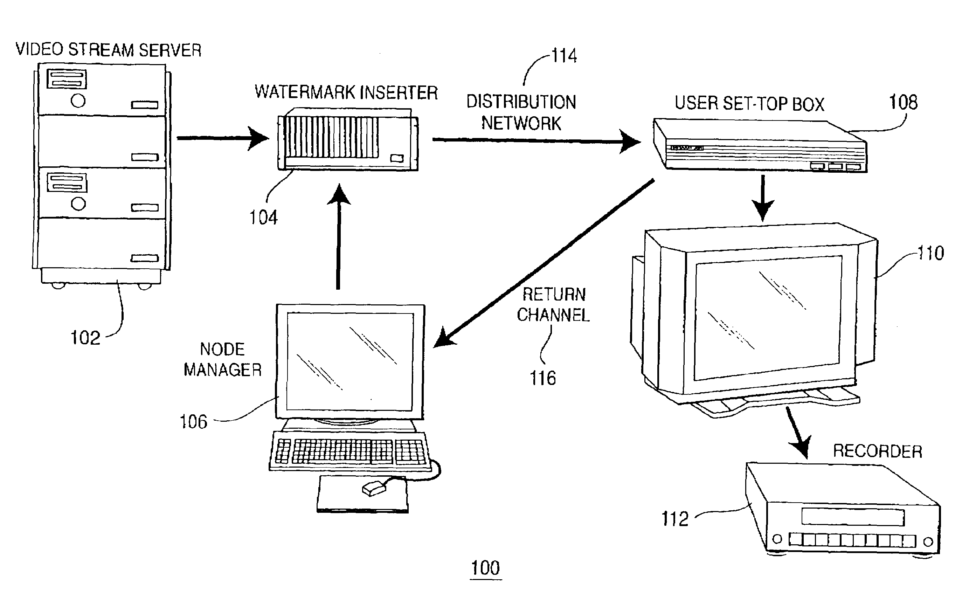

Other aspects, features, and advantages of the present invention will become more fully apparent from the following detailed description, the appended claims, and the accompanying drawings in which Fig. 1 shows a distribution path for video streams, according to one embodiment of the present invention.

### DETAILED DESCRIPTION

Fig. 1 shows a distribution system **100** for video streams, according to one embodiment of the present invention. Distribution system **100** has an upstream (manager) node and a downstream (user) node. The upstream node comprises a video stream server **102**, a watermark inserter **104**, and a node manager **106**, while the downstream node comprises a user set-top box **108**, a television set **110**, and a video recorder **112**.

Video stream server **102** provides a selected video stream to watermark inserter **104**, which inserts watermark into the video stream under the control of node manager **106** and transmits the video stream containing the watermark via distribution network **114** to the downstream node. At the downstream node, user set-top box **108** processes the received video stream for display on television set **110** and/or recording by video recorder **112**.

Depending on the particular implementation, the video stream may be represented by a compressed video bitstream at different points along the processing of distribution system **100**. For example, video stream server **102** may provide the video stream to watermark inserter **104** as a compressed video bitstream, and watermark inserter **104** may insert the watermark into the compressed video bitstream, e.g., relying on the teachings in the '205 patent application. Watermark inserter **104** may then transmit the resulting "watermarked" compressed video bitstream to user set-top box **108**, which would function as a video decoder to decode the compressed video bitstream for display on television set **110** and/or recording by video recorder **112**.

According to embodiments of the present invention, prior to the transmission of the video stream over distribution network **114** from watermark inserter **104** to user set-top box **108**, certain information is first transmitted upstream from user set-top box **108** to node manager **106** via return channel **116**. Node manager **106** ensures that that information is then included in the watermark inserted into the video stream by watermark inserter **104** prior to transmission over distribution network **114**.

For example, a user at the downstream node can operate user set-top box **108** to send a video-request message upstream to node manager **106** via return channel **116** to order a particular pay-perview movie to be transmitted to the downstream node via distribution network **114**. Included in the video-request message is information identifying the user (e.g., a user account number or a credit card number). At least some of this receiver-dependent information (i.e., information corresponding to the downstream node) is included in the watermark inserted at the upstream node by watermark inserter **104**. In this way, a copy of the video stream containing that watermark can be analyzed to identify not just the particular watermark inserter that added the watermark to the video stream, but also the particular user who ordered the video stream (or at least the particular user set-top box to which the video stream was transmitted over the distribution network). In this way, the present invention can again be used to assist in detecting and deterring illegal copying of video content.

The exact types of watermark that is added may determine whether -- and what kind of -- special equipment is needed to perform the analysis of the video stream to decode the watermark. In preferred embodiments, the watermark is not visible to a viewer when the decoded video stream is played back at normal speeds. This can be achieved, for example, by placing the watermark only into a known subset of frames in the video stream (e.g., as few as a single frame) andior by encoding the watermark information so that it is only decipherable by special equipment implementing proprietary decode processing.

The present invention is not limited to video streams, but can probably be applied to the distribution of any other type of data stream as well, in order to determine the source of illegal copying of that data stream. When applied to a video stream, a watermark corresponds to any of the standard variety of techniques for encoding watermark information into a video stream, including those techniques in which the watermark is virtually -- if not completely -- undetectable to viewers during normal playback of the video stream. When applied to other types of data streams, such as audio data, text data, or any other suitable type of data, a "watermark" corresponds to information encoded into those data stream in a manner analogous to that used for video streams. For example, when applied to audio streams, a "watermark" may correspond to information encoded into audio stream in a manner such that the information is imperceptible to a listener during normal audio playback of the audio stream. Similarly, when applied to streams of text, a "watermark" may correspond to information encoded into the text stream in a manner such that the information does not appear on either (a) the graphical display presented to the user or (b) the corresponding printed hardcopy. In all such cases, including that of video watermarking, special processing equipment may be needed to analyze the data stream to detect and identify the different watermarks that are in fact present in the stream to determine if and where the data stream diverged from a primary distribution path.

The present invention can be embodied in the form of methods and apparatuses for practicing those methods. The present invention can also be embodied in the form of program code embodied in tangible media, such as floppy diskettes, CD-ROMs, hard drives, or any other machine-readable storage medium, wherein, when the program code is loaded into and executed by a machine, such as a computer, the machine becomes an apparatus for practicing the invention. The present invention can also be embodied in the form of program code, for example, whether stored in a storage medium, loaded into and/or executed by a machine, or transmitted over some transmission medium or carrier, such as over electrical wiring or cabling, through fiber optics, or via electromagnetic radiation, wherein, when the program code is loaded into and executed by a machine, such as a computer, the machine becomes an apparatus for practicing the invention. When implemented on a general-purpose processor, the program code segments combine with the processor to provide a unique device that operates analogously to specific logic circuits.

It will be further understood that various changes in the details, materials, and arrangements of the parts which have been described and illustrated in order to explain the nature of this invention may be made by those skilled in the art without departing from the principle and scope of the invention as expressed in the following claims.

## Claims

1. A method for processing a data stream, comprising the step of:
(a) receiving, at an upstream node along a distribution path for the data stream, information identifying a downstream node along the distribution path;
(b) encoding, at the upstream node, the information into the data stream as a watermark; and
(c) transmitting the data stream with the watermark from the upstream node for receipt by the downstream node.

2. The invention of claim 1, wherein the information corresponding to the downstream node was received by the upstream node in a signal transmitted from the downstream node to the upstream node.

3. The invention of claim 2, wherein the signal containing the information accompanied a request received by the upstream node from the downstream node for the upstream node to transmit the data stream to the downstream node.

4. The invention of claim 1, wherein the data stream is a video stream.

5. The invention of claim 4, wherein the upstream node adds the watermark to a compressed bitstream for the video stream without having to fully decode the compressed bitstream.

6. The invention of claim 1, wherein the watermark further identifies a time tag corresponding to when processing of the data stream occurred at the upstream stage.

7. The invention of claim 6, wherein:
the data stream is a video stream;
the upstream node adds the watermark to a compressed bitstream for the video stream without having to fully decode the compressed bitstream;
the information corresponding to the downstream node was received by the upstream node in a signal transmitted from the downstream node to the upstream node;
the signal containing the information accompanied a request received by the upstream node from the downstream node for the upstream node to transmit the video stream to the downstream node; and
the watermark further identifies a time tag corresponding to when processing of the video stream occurred at the upstream stage.

8. A method for processing a data stream, comprising the step of:
(a) analyzing the data stream to identify a watermark contained in the data stream, wherein the watermark, having been added at an upstream node along a distribution path, contains information identifying a downstream node of the distribution path; and
(b) determining the downstream node from the watermark.

9. The invention of claim 8, wherein:
the data stream is a video stream;
the upstream node added the watermark to a compressed bitstream for the video stream without having to fully decode the compressed bitstream;
the information corresponding to the downstream node was received by the upstream node in a signal transmitted from the downstream node to the upstream node;
the signal containing the information accompanied a request received by the upstream node from the downstream node for the upstream node to transmit the video stream to the downstream node; and
the watermark further identifies a time tag corresponding to when processing of the video stream occurred at the upstream stage.

10. A machine-readable medium, having encoded thereon program code, wherein, when the program code is executed by a machine, the machine implements the steps of:
(a) analyzing the data stream to identify a watermark contained in the data stream, wherein the watermark, having been added at an upstream node along a distribution path, contains information identifying a downstream node of the distribution path; and
(b) determining the downstream node from the watermark.
